# EUROPÄISCHE PATENTSCHRIFT

(11) **EP 0 772 739 B1**
(45) Veröffentlichungstag und Bekanntmachung des Hinweises auf die Patenterteilung: **03.04.2002**
(21) Anmeldenummer: 96919606.2
(22) Anmeldetag: 22.05.1996
(51) Int. Cl.: F02P 19/02, F02D 41/14, F01N 3/20, B60R 1/06, B60H 1/00, F02N 17/047, B60R 16/02

(54) **VERFAHREN UND VORRICHTUNG ZUM STEUERN EINES HEIZELEMENTS IN EINEM KRAFTFAHRZEUG**
METHOD AND DEVICE FOR CONTROLLING A HEATING ELEMENT IN A MOTOR VEHICLE
PROCEDE ET DISPOSITIF DE REGULATION D'UN ELEMENT CHAUFFANT DANS UNE AUTOMOBILE

(30) Priorität: 30.05.1995 DE 19519713
(43) Veröffentlichungstag der Anmeldung: 14.05.1997
(73) Patentinhaber: ROBERT BOSCH GMBH, 70442 Stuttgart (DE)
(72) Erfinder: KÜTTNER, Thomas, D-70499 Stuttgart (DE)
(86) Internationale Anmeldenummer: DE9600940
(87) Internationale Veröffentlichungsnummer: WO9638665

(56) Entgegenhaltungen:
- DE-A- 2 659 264
- DE-A- 4 015 558
- DE-A- 4 100 133
- DE-C- 4 223 954
- US-A- 5 353 775
- PATENT ABSTRACTS OF JAPAN vol. 007, no. 116 (M-216), 20.Mai 1983 & JP,A,58 035273 (NIPPON DENSO KK), 1.März 1983,
- PATENT ABSTRACTS OF JAPAN vol. 006, no. 199 (M-162), 8.Oktober 1982 & JP,A,57 105566 (NIPPON DENSO CO LTD), 1.Juli 1982,
- PATENT ABSTRACTS OF JAPAN vol. 018, no. 323 (M-1624), 20.Juni 1994 & JP,A,06 074026 (MATSUSHITA ELECTRIC IND CO LTD), 15.März 1994,

## Beschreibung

### Stand der Technik

Die Erfindung betrifft ein Verfahren und eine Vorrichtung zum Steuern eines Heizelements in einem Kraftfahrzeug, insbesondere einer Gluhkerze einer Dieselbrennkraftmaschine.

Ein solches Verfahren und eine solche Vorrichtung zum Steuern eines Heizelements in einem Kraftfahrzeug ist aus der DE 41 00 133 A1 bekannt. Bei diesem Verfahren zum Steuern eines Heizelements, wird zum Einleitung eines Vorglühvorgangs ein Stromfluß durch das Heizelement freigegeben, wenn ein Turkontakt und ein Zundschalter betätigt wird.

Dabei werden diese beiden Signale und ggf. weitere Signale logisch miteinander verknüpft. Je nachdem, welche Signale gleichzeitig vorliegen, werden unterschiedliche Heizvorgange aktiviert.

Ferner ist aus der DE-OS 26 59 264 ein Verfahren und eine Vorrichtung zum Steuern eines Heizelements in einem Kraftfahrzeug bekannt. Dort wird ein Verfahren und eine Vorrichtung beschrieben, bei der ein Türkontakt vorgesehen ist, und der Stromfluß durch die Glühkerzen freigegeben wird, wenn der Türkontakt betatigt wird.

Aus dem Patent Abstract of Japan vol. 011, no. 272 (M-622) ist ein Verfahren und eine Vorrichtung zum Steuern eines Heizelements in einem Gabelstapler bekannt. Das Heizelement wird nur dann bestromt, wenn die Betatigung eines Türkontaktes und eines Umschalters in einer bestimmten Reihenfolge erfolgen.

Nachteilig bei dieser Einrichtung ist, daß bei jeder Betätigung des Türkontakts, insbesondere bei jedem Schließen der Tur, ein Gluhvorgang eingeleitet wird. Dies fuhrt dazu, daß die Fahrzeugbatterie stark belastet wird, da beispielsweise auch beim Aussteigen des Fahrers ein Gluhvorgang eingeleitet wird.

### Aufgabe der Erfindung

Der Erfindung liegt die Aufgabe zugrunde, bei einem Verfahren und einer Vorrichtung zum Steuern eines Heizelements in einem Kraftfahrzeug der eingangs genannten Art einen schnellen Startvorgang zu ermöglichen ohne die Fahrzeugbatterie unnötig zu belasten. Diese Aufgabe wird durch die in den unabhängigen Ansprüchen gekennzeichneten Merkmale gelöst.

### Zeichnung

Die Erfindung wird nachstehend anhand der in der Zeichnung dargestellten Ausführungsformen erläutert. Es zeigen Figur 1 ein Blockdiagramm der erfindungsgemäßen Vorrichtung, Figur 2 verschiedene über der Zeit auf getragene Signale, und Figur 3 ein Flußdiagramm zur Verdeutlichung der erfindungsgemäßen Vorgehensweise.

### Beschreibung der Ausführungsbeispiele

Im folgenden wird die erfindungsgemäße Vorgehensweise am Beispiel der Steuerung einer Glühkerze einer selbstzündenden Brennkraftmaschine beschrieben. Die erfindungsgemäße Vorgehensweise ist aber nicht auf diese Anwendung beschränkt. Es kann auch bei anderen Heizelementen, die in Kraftfahrzeugen eingesetzt werden, entsprechend vorgegangen werden. Besonders vorteilhaft ist die Vorgehensweise bei der Beheizung einer Lambdasonde oder eines Katalysators einer fremdgezündeten Brennkraftmaschine. In diesem Fall ist die Lambdasonde bzw. der Katalysator schon zu Beginn des Startvorgangs voll funktionsfähig. Dadurch kann das Abgasverhalten der Brennkraftmaschine verbessert werden.

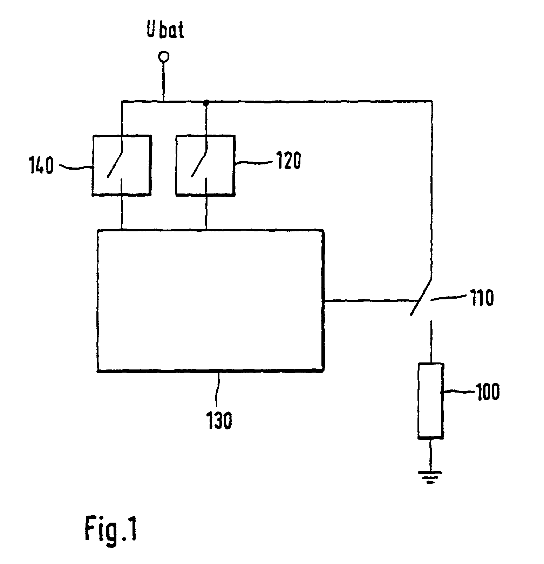

In Figur 1 sind anhand eines Blockdiagramms die wesentlichen Elemente der erfindungsgemäßen Vorrichtung dargestellt. Mit 100 ist das Heizelement bezeichnet. Mit dem einen Anschluß steht das Heizelement 100 mit Masse in Verbindung. Mit seinem zweiten Anschluß steht das Heizelement 100 über ein erstes Schaltmittel 110 mit einer Versorgungsspannung Ubat in Verbindung.

Die Versorgungsspannung Ubat steht ferner über ein zweites Schaltmittel 120 und ein drittes Schaltmittel 140 mit einer Steuereinheit 130 in Verbindung. Die Steuereinheit 130 beaufschlagt das erste Schaltmittel 110 mit einem Ansteuersignal.

Bei dem ersten Schaltmittel 110 handelt es sich vorzugsweise um ein von der Steuereinheit 130 angesteuertem Relais bzw. um einen elektronischen Schalter wie beispielsweise einen Leistungstransistor. Bei dem zweiten Schaltmittel 120 handelt es sich um einen mit dem Zündschluß gekoppelten Schalter, der durch Betätigung des Fahrers des Kraftfahrzeuges betätigbar ist. Beim dritten Schalter 140 handelt es sich um einen Türkontakt, der durch öffnen bzw. durch Schließen der Tür betätigbar ist. Insbesondere ist der Schalter 140 geschlossen, wenn die Tür geöffnet ist.

Bei der besonders vorteilhaften Ausgestaltung ist vorgesehen, daß das zweite Schaltmittel 120 und das dritte Schaltmittel 140 mit einer Verzögerungsfunktion ausgestaltet sind. Dies bedeutet, daß beispielsweise das Schaltmittel 120 auch nach Betätigen durch den Fahrer noch für eine gewisse Verzögerungszeit T_{N}, geschlossen bleibt. Entsprechendes gilt auch für das dritte Schaltmittel 140, so bleibt dieser Schalter ebenfalls für eine gewisse Verzögerungszeit T_{V} nach dem Betätigen der Tür in seiner geschlossenen Stellung.

Die Steuereinheit 130 steuert abhängig von dem Schaltzustand des zweiten Schaltmittels 120 und des dritten Schaltmittels 140 das erste Schaltmittel 110 an. Durch Betätigen des ersten Schaltmittels 110 wird der Stromfluß durch das Heizelement freigegeben.

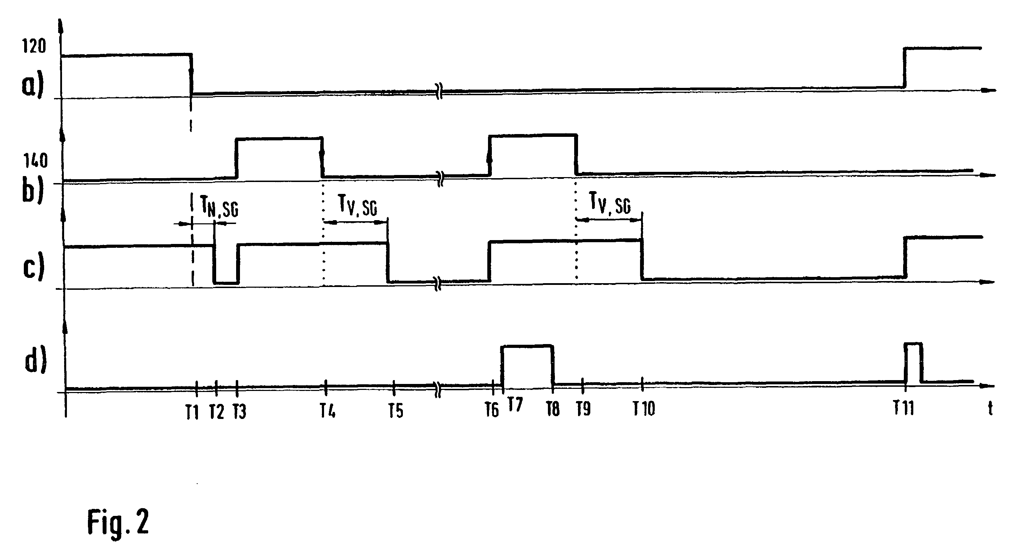

In Figur 2 sind verschiedene Signale über der Zeit aufgetragen. In Figur 2a ist das Signal, das am Schaltmittel 120 anliegt, aufgetragen. Solange das Schaltmittel 120 geschlossen ist, das heißt das Zündschloß betätigt ist, befindet sich dieses Signal auf einem hohen Pegel. Solange das Schaltmittel 120 geöffnet ist, liegt dieses Signal auf einen niedrigeren Pegel.

In Figur 2b ist das Signal des dritten Schaltmittels 140, das die Stellung des Türkontaktes kennzeichnet aufgetragen. Solange das Schaltmittel geöffnet ist, das heißt die Tür geschlossen ist, befindet sich das Signal auf einem niederen Pegel. Sobald das Schaltmittel geschlossen ist, das heißt die Tür geöffnet ist, nimmt das Signal einen hohen Pegel an. In Figur 2c ist die an der Steuereinheit 130 anliegende Versorgungsspannung, die über die Schaltmittel 120 und 140 zugeführt werden, aufgetragen.

In Figur 2d ist das Ansteuersignal, mit dem die Steuereinheit 130 das Schaltmittel 110 beaufschlagt, aufgetragen. Wenn dieses Signal auf hohem Pegel liegt, gibt das erste Schaltmittel 110 den Stromfluß durch das Heizelement frei.

Bis zum Zeitpunkt T1 befindet sich das Zündschloß 120 in seiner betätigten Position. Dies bedeutet das Steuergerät befindet sich in seinem Mormalbetrieb. Bis zu diesem Zeitpunkt T1 nimmt die Versorgungsspannung 2c einen hohen Signalpegel an. Nach Ablauf der Verzögerungszeit T_{N} zum Zeitpunkt T2 fällt die an der Steuereinheit 130 anliegende Versorgungsspannung auf 0 ab.

Zum Zeitpunkt T3 öffnet der Fahrer die Tür um auszusteigen, was zur Folge hat, daß der Türkontakt 140 betätigt wird, und dessen Ausgangssignal bis zum Zeitpunkt T4 einen hohen Pegel annimmt. Ab dem Zeitpunkt T3 nimmt die an der Steuereinheit 130 anliegende Versorgungsspannung ebenfalls wieder einen hohen Pegel an, der zum Zeitpunkt T5 nach Ablauf der Verzögerungszeit T_{V} nach dem Zeitpunkt T5, auf seinen niederen Pegel abfällt. Zu diesem Zeitpunkt hat der Fahrer üblicherweise das Fahrzeug verlassen und die Tür geschlossen.

Während der Zeitspanne zwischen dem Zeitpunkt T5 und dem Zeitpunkt T6 ist das Fahrzeug abgestellt. Zum Zeitpunkt T6 öffnet der Fahrer die Fahrertür, was zur Folge hat, daß das Signal am Türkontakt 140 auf seinen hohen Pegel ansteigt. Gleichzeitig steigt die an der Steuereinheit 130 anliegende Versorgungsspannung auf einen hohen Pegel an. Nach einer kurzen Verzögerungszeit zum Zeitpunkt T7 gibt die Steuereinheit 130 ein Ansteuersignal zur Beaufschlagung des Schaltmittels 110 vor. Dies bewirkt, daß zwischen dem Zeitpunkt T7 und dem Zeitpunkt T8 das Heizelement 100 mit Strom beaufschlagt wird. Dieser Vorgang wird als Vorglühen bezeichnet.

Vorzugsweise ist vorgesehen, daß die Zeitdauer zwischen dem Zeitpunkt T7 und T8 eine fest vorgegebene Zeitdauer darstellt bzw. abhängig von verschiedenen Parametern wie beispielsweise der Umgebungstemperatur vorgebbar ist. Zum Zeitpunkt T9 schließt der Fahrer die Fahrertür, was zur Folge hat, daß das Signal am Türkontakt 140 auf niederem Pegel abfällt. Nach der Verzögerungszeit T_{V} fällt auch die Versorgungsspannung an der Steuereinheit 130 auf einen tiefen Pegel ab. Vorzugsweise ist die Verzögerungszeit T_{V} so gewählt, daß sie länger ist, als der Zeitraum, zwischen den Zeitpunkten T7 und T8. Damit ist gewährleistet, daß auch bei schnellem Schließen der Tür, das bedeutet der Zeitpunkt T9 liegt vor dem Zeitpunkt T8, ausreichend Zeit zur Verfügung steht, um das Heizelement zu bestromen.

Zum Zeitpunkt T11 startet der Fahrer durch Betätigung des Zündschlosses 120 das Fahrzeug. Dies hat zur Folge, daß sowohl das Signal am Zündschloß 120 und die Versorgungsspannung 130 einen hohen Pegel annimmt. Desweiteren kann vorgesehen sein, daß zu diesem Zeitpunkt T11 das Schaltmittel 110 ebenfalls nochmals bestromt wird um den normalen Glühvorgang durch zuführen. Ein Starten der Brennkraftmaschine ist nach Ablauf des Glühvorgangs möglich. Die Wartezeit bzw. die Glühzeit wird durch das Vorglühen wesentlich verkürzt.

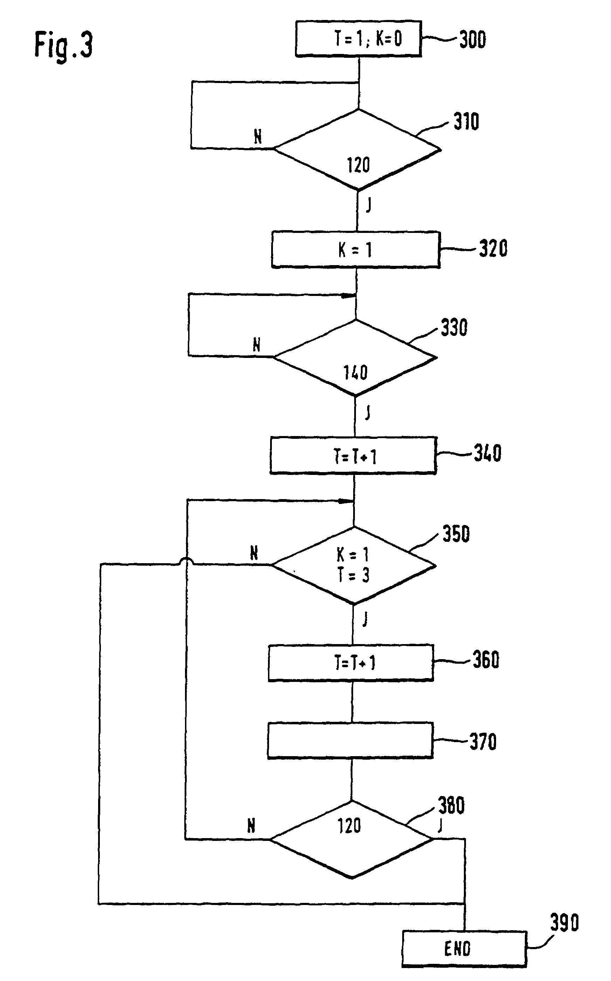

In Figur 3 ist die erfindungsgemäße Vorgehensweise anhand eines Flußdiagramms verdeutlicht. Zu Beginn des Programms im ersten Schritt 300 wird ein Zähler T auf 1 und ein Zähler K auf 0 gesetzt. Eine sich anschließende Abfrage 310 überprüft, ob am Zündschalter 120 ein Wechsel des Signals von einem hohen Pegel auf einen niederen Pegel aufgetreten ist. Ist dies nicht der Fall, so wird die Abfrage zu einem späteren Zeitpunkt erneut abgefragt. Wird ein solcher Wechsel erkannt, so wird anschließend in Schritt 320 ein Speicher K auf den Wert 1 gesetzt. Dieser Wert zeigt an, daß am Zündschloß 120 ein Abfall des Signals von hohen auf niederen Pegel aufgetreten ist. Die Abfrage 310 erkennt, daß der Motor bzw. die Steuereinheit 130 abgeschaltet wurde.

Anschließend erfolgt die Abfrage 330. Diese überprüft, ob am Türkontakt 140 ein Wechsel von einem hohen auf einen niederen Pegel aufgetreten ist. Ist dies nicht der Fall, so wird nach einer vorgegebenen Zeit die Abfrage 330 wiederholt. Wird ein solcher Abfall erkannt, so folgt der Schritt 340, in dem der Inhalt des Zählers T um 1 erhöht wird. Die Abfrage 330 erkennt, ob der Fahrer ausgestiegen ist.

Anschließend folgt die Abfrage 350 die überprüft, ob der Wert des Zählers T gleich 3 ist und ob der Zähler K den Wert 1 besitzt. Ist dies nicht der Fall, so endet das Programm im Schritt 390. Ist dies der Fall, so wird im Schritt 360 der Zähler T um 1 erhöht. Die Abfrage 350 erkennt, ob der Fahrer wieder eingestiegen ist. Anschließend wird in Schritt 370 der Schalter 110 betätigt, damit der Stromfluß durch das Heizelement 100 freigegeben wird.

Die sich anschließende Abfrage 380 überprüft, ob das Signal am Zündschloß 120 von einem niederen auf einen hohen Pegel angestiegen ist. Ist dies der Fall, endet das Programm ebenfalls im Schritt 390. Ist dies nicht der Fall, so wird nach einer vorgegebenen Zeit die Abfrage 350 wiederholt.

Wird nacheinander erkannt, daß der Motor mittels des Zündschlüssels abgeschaltet wurde, der Fahrer ausgestiegen und zu einem späteren Zeitpunkt wieder eingestiegen ist wobei diese Aktionen in dieser Reihenfolge erfolgten, so kann davon ausgegangen werden, daß ein Vorglühvorgang einzuleiten ist. Im Schritt 370 wird der Stromfluß freigegeben. Dies bedeutet, daß der Schalter 110 geschlossen wird. Bei einer Ausgestaltung der Erfindung kann auch vorgesehen sein, daß die Steuereinheit 130 ein Signal bildet, daß anzeigt, daß der Vorglühvorgang eingeleitet werden kann. Die Steuereinheit 130 steuert bei vorliegen dieses Signal den Schalter 110 mit einem entsprechenden Tastverhältnis an.

Werden nicht alle Aktionen erkannt, bzw. werden die Aktionen in einer anderen Reihenfolge und oder häufiger erkannt, so wird der Vorglühvorgang nicht eingeleitet.

In dem Fall, daß sich der Fahrer normal verhält, das heißt, daß er das Fahrzeug abstellt, aussteigt und zu einem späteren Zeitpunkt wieder einsteigt und den Motor startet, kann die Startzeit durch das sofortige Vorglühen nach dem Einsteigen erheblich reduziert werden.

Lediglich wenn die Aktion Motor abschalten und Aussteigen nicht in der vorgesehenen Reihenfolge erfolgen, wird der nach der Abfrage 350 der Vorglühvorgang eingeleitet.

Bei einer anderen Reihenfolge und/oder bei einem mehrmaligen Signal des Türkontakts startet der Vorglühvorgang nicht mit der Betätigung des Türkontakts.

## Patentansprüche

1. Verfahren zum Steuern eines Heizelementes in einem Kraftfahrzeug mit einem Turkontakt, insbesondere einer Gluhkerze einer selbstzundenden Brennkraftmaschine, wobei zur Einleitung eines Vorheizvorgangs ein Stromfluß durch das Heizelement freigegeben wird, wenn der Turkontakt betatigt wird, **dadurch gekennzeichnet, daß** der Stromfluß nur dann freigegeben wird, wenn die Betätigung des Turkontakts und das Erfulltsein einer weiteren Bedingung in einer vorgegebenen zeitlichen Reihenfolge erkannt werden, wobei als weitere Bedingung uberpruft wird, ob ein Wechsel des Zustandes eines Zundschlosses erfolgte.

2. Verfahren nach Anspruch 1, daß der Stromfluß nur dann freigegeben wird, wenn nach einem Wechsel des Zustandes des Zündschlosses der Turkontakt wenigstens zweimal betatigt wurde.

3. Vorrichtung zum Steuern eines Heizelementes in einem Kraftfahrzeug mit einem Türkontakt, insbesondere einer Gluhkerze einer selbstzundenden Brennkraftmaschine, mit Mitteln, die den Stromfluß durch das Heizelement freigegeben, wenn der Turkontakt betatigt wird, **dadurch gekennzeichnet, daß** Mittel vorgesehen sind, die den Stromfluß nur dann freigegeben, wenn die Betätigung des Türkontakts und das Erfulltsein einer weiteren Bedingung in einer vorgegebenen zeitlichen Reihenfolge erkannt werden wobei als weitere Bedingung überprüft wird, ob ein Wechsel des Zustandes eines Zündschlosses erfolgte.

4. Vorrichtung nach Anspruch 3, **dadurch gekennzeichnet, daß** es sich bei dem Heizelement um ein Heizelement zur Beheizung einer Lambdasonde und/oder eines Katalysators handelt.

## Claims

1. Method for controlling a heating element in a motor vehicle having a door contact, in particular a glowplug of an internal combustion engine with auto-ignition, in which, in order to initiate a preheating process, a flow of current across the heating element is enabled when the door contact is actuated, **characterized in that** the flow of current is enabled only if the actuation of the door contact and the fulfilment of a further condition are deleted in a predefined time sequence, in which case it is checked, as a further condition, whether a change in the state of an ignition lock has taken place.

2. Method according to Claim 1, **characterized in that** the flow of current is enabled only if the door contact has been actuated at least twice after a change in the state of the ignition lock.

3. Device for controlling a heating element in a motor vehicle having a door contact, in particular a glowplug of an internal combustion engine with auto-ignition, having means which enable the flow of current across the heating element when the door contact is actuated, **characterized in that** means are provided which enable the flow of current only if the actuation of the door contact and the fulfilment of a further condition are detected in a predefined time sequence, in which it is checked, as a further condition, whether a change in the state of an ignition lock has taken place.

4. Device according to Claim 3, **characterized in that** the heating element is a heating element for heating a lambda probe and/or a catalytic converter.

## Revendications

1. Procédé de commande d'un élément chauffant d'un véhicule automobile avec un contact de porte, notamment une bougie de préchauffage d'un moteur à combustion interne, à allumage non commandé, selon lequel
pour commencer une opération de préchauffage on libère le courant dans l'élément chauffant lorsque le contact de porte est actionné,
**caractérisé en ce que**
le passage de courant n'est libéré que si l'actionnement du contact de porte et la réponse à une autre condition sont vérifiés dans une succession chronologique prédéterminée et,
comme autre condition, on vérifie s'il y a eu un changement de l'état du contact d'allumage.

2. Procédé selon la revendication 1,
**caractérisé en ce que**
le passage du courant n'est libéré que si après un changement de l'état du contact d'allumage, le contact de porte a été actionné au moins deux fois.

3. Dispositif pour commander un élément chauffant dans un véhicule automobile avec un contact de porte, notamment une bougie de préchauffage d'un moteur à combustion interne à allumage non commandé, comprenant des moyens qui libèrent le passage du courant à travers l'élément chauffant si le contact de porte a été actionné,
**caractérisé par**
des moyens qui ne libèrent le passage du courant que si le contact de porte a été actionné et si une autre condition a été détectée dans une succession chronologique prédéfinie, et
comme autre condition, on vérifie si la serrure de contact a changé d'état.

4. Dispositif selon la revendication 3,
**caractérisé en ce que**
l'élément chauffant est un élément chauffant une sonde lambda et/ou un catalyseur.
